# EUROPEAN PATENT APPLICATION

(11) **EP 2 347 851 A2**
(43) Date of publication of application: **27.07.2011**
(21) Application number: 11000377.9
(22) Date of filing: 18.01.2011
(51) Int. Cl.: B23K 9/133

(54) **Low wire level alarm**

(30) Priority: 21.01.2010 US 691554
(71) Applicant: SIDERGAS SpA, 37010 S. Ambrogio di Valpolicella (IT)
(72) Inventor: Gelmetti, Carlo, 37017 Lazise (VR) (IT)
(74) Representative: Prinz & Partner

(57) **Abstract**

A low wire level alarm comprises a signal element and a wire level detection element. The wire level detection element is adapted for detecting the level of welding wire contained in a welding wire bulk pack, and the signal element is adapted for giving an operator a visual and/or acoustic signal on the level of welding wire contained in the bulk pack. In a welding wire bulk pack having a base, side walls and a coil of welding wire placed inside the side walls, a retainer is arranged on top of the welding wire coil so as to descend in the bulk pack when the level of welding wire inside the pack decreases. A low wire level alarm system is used for signaling to an operator that the level of welding wire remaining in the bulk pack has fallen below a predetermined threshold.

## Description

The invention relates to bulk packs containing welding wire which is used in welding machines or robots for making weld seams.

The use of bulk packs containing large quantities of reverse wound welding wire (in some cases up to as much as 1000 kg) is becoming increasingly popular in the industry since it offers the advantage of great savings thanks to a reduced pack changeover downtime and a higher productivity. Being able to avoid unwanted weld interruptions is, for some applications like the production of pressure vessels or pipelines or wind towers, extremely important because stoppages in the middle of a weld can be the cause for cracks, weld defects, or mechanical failures with consequent product liability issues. A sound good weld with no defects or imperfections is absolutely necessary in order to prevent subsequent leaks or failures. The industry today, especially with large size wires, utilizes mostly coils with welding wire content up to 100 kg, but more and more end users are adopting bulk packs or bulk containers with twist-free reverse wound welding wire in combination with high performing low friction guiding liners with rolling elements inside; introducing a welding wire as thick as 4mm or even more into a long liner with many curvatures up to the welding torch could however result in a very difficult operation and could take as much time as changing smaller coils.

It is known in the prior art to provide small inspection windows in the outer wall of the welding wire bulk packs which allow to visually inspect the level of welding wire contained in the respective bulk pack. This however requires that an operator approaches the respective bulk pack to be able to determine the wire level in the inspection window.

It is also known in the prior art to butt-weld the end of the welding wire stored in a first, currently used bulk pack to the beginning of the welding wire stored in a second, new bulk pack, and to allow the welding wire to automatically change from the first to the second bulk pack. Such system is known as a 24/7 welding system as it allows uninterrupted welding. Further, such system eliminates the risk that the welding machine runs short of welding wire when the welding wire of a currently used bulk pack has been entirely consumed so that the welding wire of a new bulk pack must be fed through the entire welding wire guiding system from the wire entry up to the welding torch. If however for some reasons the operator does not use a 24/7 welding system and does not notice in time that the welding wire contained in the currently used bulk pack is completely consumed, then the wire end is being completely pulled through the liner. This would generate two possible situations: The operator is either forced to repeat the process of the initial insertion of the wire, or the welding process has to be suddenly interrupted, with the consequent quality issues and technical problems previously explained.

The object of the invention is to provide a simple system which reliably provides to an operator an indication that the level of welding wire contained in a bulk pack has reached a low level.

The invention provides a low wire level alarm, comprising a signal element and a wire level detection element. The wire level detection element is adapted for detecting the level of welding wire contained in a welding wire bulk pack. The signal element is adapted for giving an operator a visual and/or acoustic signal on the level of welding wire contained in the bulk pack. This alarm system is inexpensive and practical as it can provide a timely warning of the low wire level inside the pack. If promptly and adequately advised by a visual and/or acoustic warning, the operator can let the weld cycle be completed and then stop the welding process at the wanted time and proceed to cut off and discard the residual welding wire loops, joining the wire with the butt welder to the start of a new pack.

The invention also provides a welding wire bulk pack having a base, side walls and a coil of welding wire placed inside the side walls. A retainer is arranged on top of the welding wire coil so as to descend in the bulk pack when the level of welding wire inside the pack decreases. A low wire level alarm system is provided which is adapted for signaling to an operator that the level of welding wire remaining in the bulk pack has fallen below a predetermined threshold. The present invention discloses a system, applicable to bulk welding wire packs or containers, which activates a low wire level alarm when the bulk pack is close to empty; the alarm informs the operator in advance so that the end of the welding wire from the empty bulk pack can be butt-welded to the start of the new full bulk pack. The system is especially useful in those applications like submerged arc welding where having to completely re-feed the new wire through a liner would be a problematic and time consuming operation.

Preferably, the alarm system is easily movable from one bulk pack to the next, and it should be preferably mounted directly at the pack and be battery operated, in order to avoid the use of electrical cables that could represent a hazard and an impediment for an operator that needs to move freely around the welding cell.

In a mechanically simple embodiment, the wire level detection element is a rod adapted for being placed on top of a retainer arranged inside a welding wire bulk pack. It preferably has a mark as the signal element which is visible for an operator. In order to allow setting the alarm to a desired level of welding wire remaining in the bulk pack, the signal element is arranged on the rod so as to be adjustable to a desired level.

In an alternative embodiment, the signal element comprises an electric sensor which can issue an optical alarm, an acoustic alarm or a combination of an acoustic and an optical alarm.

Preferably, the electric sensor is battery powered so that no electric wiring is required.

The electric sensor can cooperate with a rod acting as the wire level detection element, the rod being placed on top of a retainer arranged inside a welding wire bulk pack and having a mark which can be detected by the electric sensor. The electric sensor preferably uses a proximity sensor for detecting the mark.

The electric sensor can alternatively cooperate with a cord wound on a reel and associated to the retainer, such that the electric sensor can detect the amount of cord unwound from the reel when the retainer descends in the bulk pack.

The cord can be provided with a weight at its end associated to the retainer so that the cord simply follows the retainer when it descends in the bulk pack. Alternatively, the cord can comprise one of a magnet and a piece of ferromagnetic metal at its end associated to the retainer, and the retainer can comprise one of a piece of ferromagnetic metal and a magnet. This ensures that the cord is pulled by the retainer during its descending motion in the bulk pack.

In another alternative, the retainer can comprise an attachment means for mechanically attaching the cord to the retainer. The retainer can for example comprise an attachment eye, and the cord can comprise a hook. In addition, a cushioning spring can provided.

In an alternative embodiment, the wire level detection element is an acoustic or optical emitter, and the electric sensor has a receiver and an evaluating unit adapted to calculate the wire level based on the propagation time of the acoustic or optical signals from the emitter to the retainer and back to the receiver. This allows detecting the distance between the electric sensor and the retainer in a contact-free manner. In order to save battery energy, the detection of the wire level can be performed in intervals of e.g. 15 minutes only.

In welding wire installations using a cover on top of the bulk pack, the sensor is arranged on top of the cover, for example in an appropriate recess or mount. In welding wire installations using no cover on top of the bulk pack, the sensor comprises a mount which allows attaching or clipping it to one of the side walls of the bulk pack. In any case, the electric sensor can easily be removed from one bulk pack and be easily installed at the next bulk pack.

The invention will now be described with reference to the enclosed drawings. In the drawings,
- Figures 1a and 1b show a first embodiment of the invention, with the bulk pack being in an initial condition in Figure 1a and in a low wire level condition in Figure 1b;
- Figures 2a and 2b show a second embodiment of the invention, with the bulk pack being in an initial condition in Figure 2a and in a low wire level condition in Figure 2b;
- Figures 3a and 3b show a third embodiment of the invention, with the bulk pack being in an initial condition in Figure 3a and in a low wire level condition in Figure 3b;
- Figures 4a and 4b show a fourth embodiment of the invention, with the bulk pack being in an initial condition in Figure 4a and in a low wire level condition in Figure 4b;
- Figures 5a and 5b show a fifth embodiment of the invention, with the bulk pack being in an initial condition in Figure 5a and in a low wire level condition in Figure 5b;
- Figures 6a and 6b show a sixth embodiment of the invention, with the bulk pack being in an initial condition in Figure 6a and in a low wire level condition in Figure 6b; and
- Figures 7a and 7b show a seventh embodiment of the invention, with the bulk pack being in an initial condition in Figure 7a and in a low wire level condition in Figure 7b.
- Figures 8a and 8b show an eights embodiment of the invention, with the bulk pack being in an initial condition in Figure 8a and in a low wire level condition in Figure 8b.

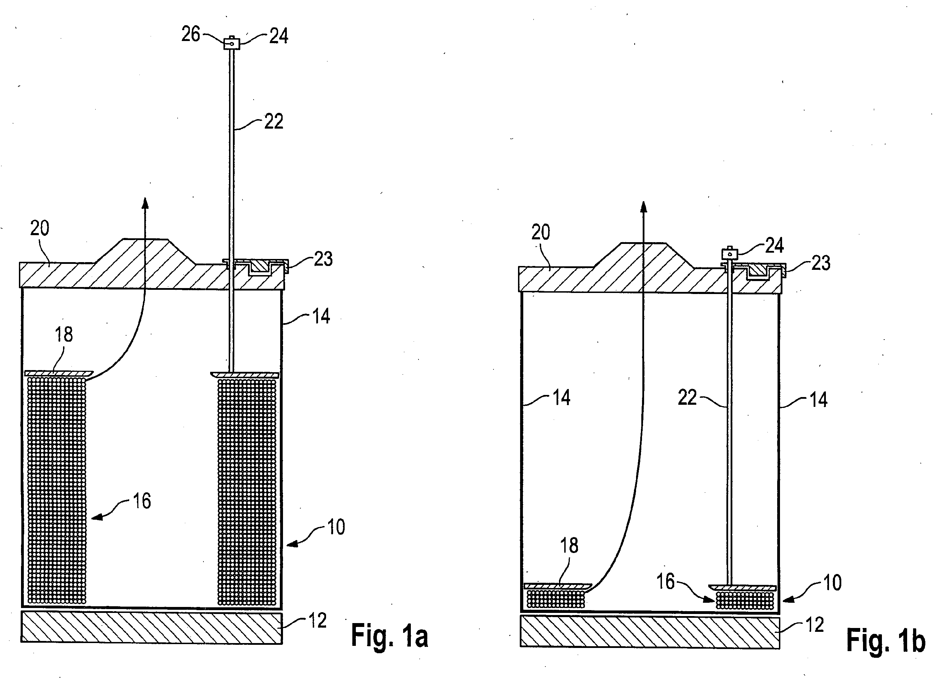

In Figure 1, a welding wire bulk pack 10 is shown, which has a base 12 and side walls 14. Base 12 can be a wooden pallet, and side walls 12 can be formed from cardboard. In a top view, the bulk pack can have a circular or a polygonal shape. Side walls 14 can be formed from a single piece of cardboard which extends around the entire circumference of the bulk pack.

In the interior of the bulk pack, a welding wire coil 16 is arranged. Welding wire coil 16 is formed from a continuous length of welding wire wound into the bulk pack so that the welding wire can be withdrawn from the upper end face of the coil. In order to prevent that welding wire prematurely lifts from the coil, a retainer 18 is arranged on top of welding wire coil 16, which mechanically holds the welding wire at its place until it is being withdrawn. Withdrawal of the welding wire takes place through an opening in a cover 20 which is placed on side walls 14 so as to close the upper side of the bulk pack.

A rod 22 is provided which extends vertically through an opening in cover 20 so as to rest on top of retainer 18. A small depression or similar accommodation for the lower end of rod 22 can be provided at the retainer in order to make sure that rod 22 is kept in a vertical orientation. In order to improve the stability, a holding bracket 23 can be arranged on top of cover 20, the holding bracket being placed in a suitable depression or mount which is formed in cover 20.

Associated with rod 22 is a mark 24 which can be connected to rod 22 at a desired level. To this end, a small adjustment screw 26 is provided within mark 24. As can be seen by comparing Figures 1a and 1b, retainer 18 descends within bulk pack 10 when the welding wire forming welding wire coil 16 is being increasingly consumed. Rod 22 then acts as a wire level detection element which descends into the bulk pack as a result of the retainer 18 descending. Mark 24, which is preferably coated with a signal color such as red, acts as a signal element which very conveniently allows an operator to see from a distance how much wire is left inside the bulk pack. As soon as mark 24 sits on top of cover 20, the operator is informed that the predetermined level of welding wire remaining in the bulk pack has been reached. By adjusting the mark to a desired position on rod 22, this level of welding wire at which the mark reaches the cover 20 can be adjusted by the operator according to the requirements.

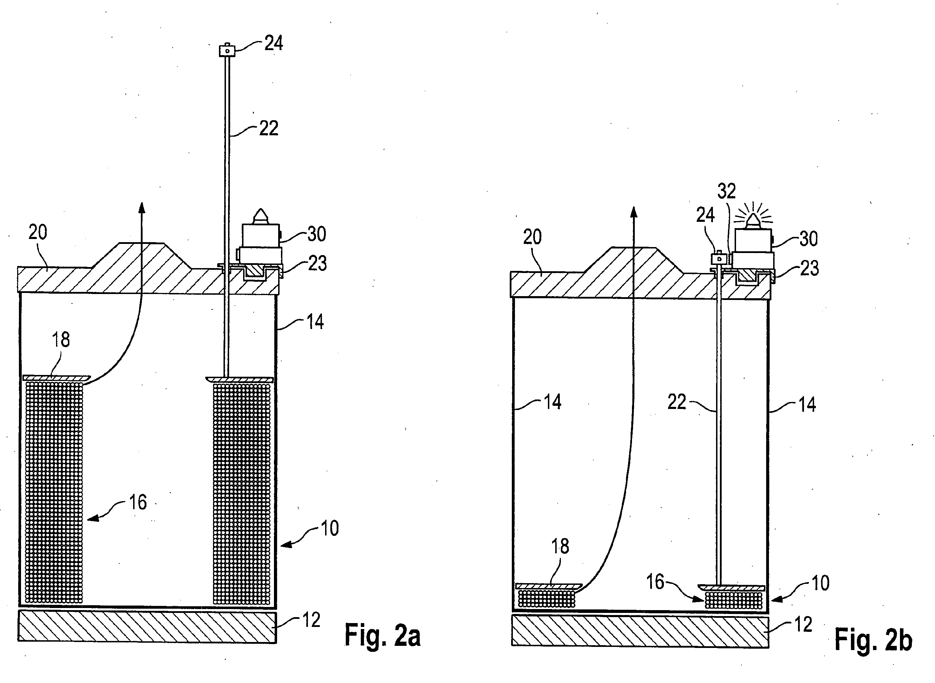

In Figure 2, a second embodiment is described. For those elements already known from the first embodiment, the same reference numerals are used, and reference is made to the above comments.

The second embodiment distinguishes over the first embodiment in that an electric sensor 30 is provided which is able to detect the position of mark 24. In particular, electric sensor 30 can comprise a proximity sensor 32 which is able to detect the presence of mark 24. As soon as the welding wire has been withdrawn from the bulk pack to an extent that retainer 18 has descended to the level shown in Figure 2b, mark 24 has reached a position in front of proximity sensor 32 so that electric sensor 30 is activated. Electric sensor 30 can issue an optical signal such as a flash light, can issue an acoustic signal such as a warning tone, or can issue a combination of an acoustic and an optical alarm. Thereby, an operator is immediately notified that the welding wire remaining in the particular bulk pack has reached a certain low level. Here again, the level at which the alarm is given can be set to a desired value by simply changing the position of mark 24 on rod 22.

Electric sensor 30 is preferably powered by a battery so that no electric cables and no wiring is required. The entire alarm system can be simply transferred from one emptied bulk pack to a new bulk pack by simply transferring cover 20 with rod 22, holding bracket 23 and electric sensor 30 to the new pack.

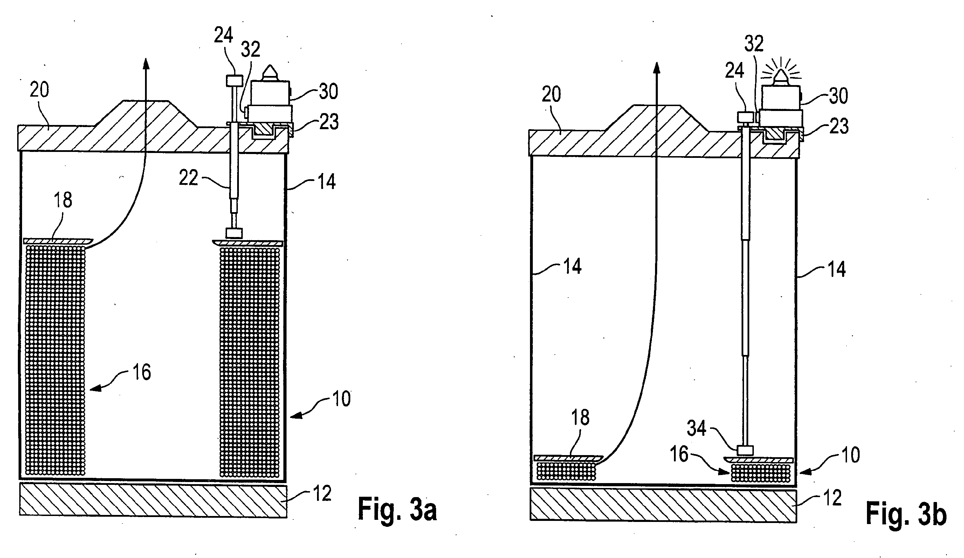

In Figure 3, a third embodiment of the invention is shown. For those components which are already known from the previous embodiments, the same reference numerals are used, and reference is made to the above comments.

The difference between the third and the second embodiment is that in the third embodiment, rod 22 is formed from telescopic retractable tubes, the lowest of the tubes having a weight 34 which rests on the upper surface of retainer 18. In the initial condition shown in Figure 3a, mark 24 is maintained spaced from proximity sensor 32 so that no alarm is issued. When retainer 18 has descended to a level which does not allow the telescopic rod 22 to be extended any further, mark 24 is pulled downwards so as to lie opposite proximity sensor 32. Then, the alarm is issued.

The main advantage of the third embodiment over the first and second embodiment is that rod 22 does not significantly protrude upwardly over the bulk back in the initial condition, thereby preventing any entanglement of the welding wire with rod 22. It must be noted that in view of the capacity and the dimensions of large bulk packs, rod 22 used in the first and second embodiment can protrude up to 30 inches above cover 20 when the bulk pack is completely filled.

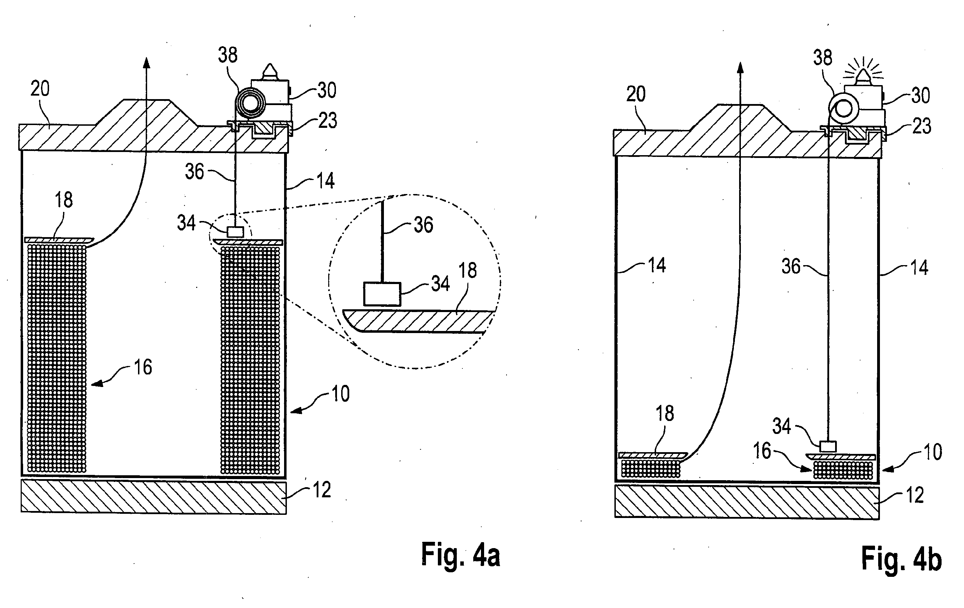

In Figure 4, a fourth embodiment of the invention is shown. For the elements already known from one of the preceding embodiments, the same reference numerals are used, and reference is made to the above comments.

The main difference between the fourth embodiment and the first three embodiments is that in the fourth embodiment, a cord 36 is used as the wire level detection element. Cord 36 is connected to a reel 38 rotatably mounted at electric sensor 30. At its free end, cord 36 is provided with a weight 34 which rests on top of retainer 18. When retainer 18 descends inside bulk pack 10 as a result of welding wire being withdrawn, an increasing amount of cord 36 is withdrawn from reel 38. Electric sensor 30 is adapted for counting the number of revolutions made by reel 38, e.g. by means of a microswitch. As soon as a predetermined number has been reached, the alarm is given. Here again, the level at which the alarm is given can be individually defined by the operator according to the requirements.

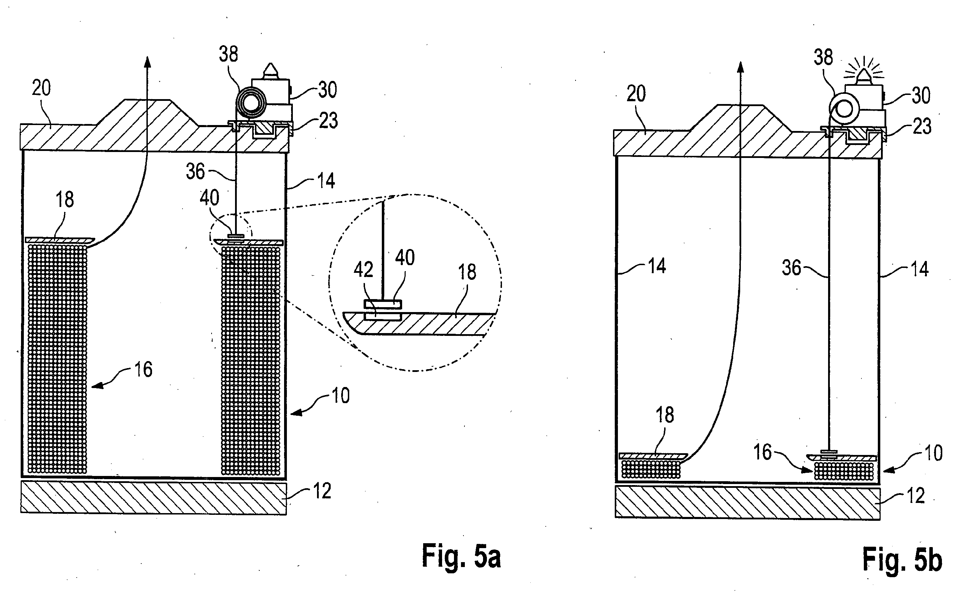

In Figure 5, an embodiment is shown which is an alternative to the embodiment shown in Figure 4. The difference over the embodiment shown in Figure 4 is that cord 36 in the embodiment of Figure 5 is provided with a small magnet 40, and retainer 18 is provided with a small piece 42 of ferromagnetic metal. Of course, the magnet could also be provided in the retainer while the piece of ferromagnetic metal could be attached to cord 36. In any case, the magnetic attraction ensures that cord 36 is reliably wound from reel 38 when retainer 18 descends downwardly in the bulk pack 10.

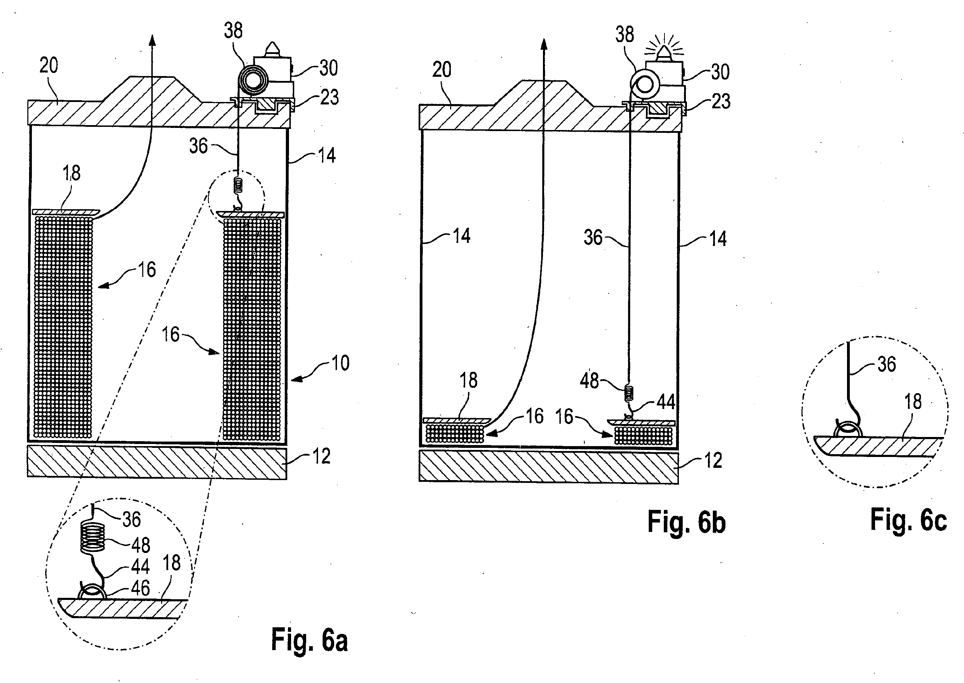

In Figure 6, another alternative is shown. Here, cord 36 is provided with a hook 44 which engages into an attachment eye 46 arranged at retainer 18. In addition, a cushioning spring 48 can be provided between hook 44 and cord 36. The mechanical connection between cord 36 and retainer 18 ensures that cord 36 is reliably unwound from reel 38 when retainer 18 descends downwardly in the bulk pack.

In Figure 6c, a simplified embodiment is shown in which no cushioning spring 48 is used.

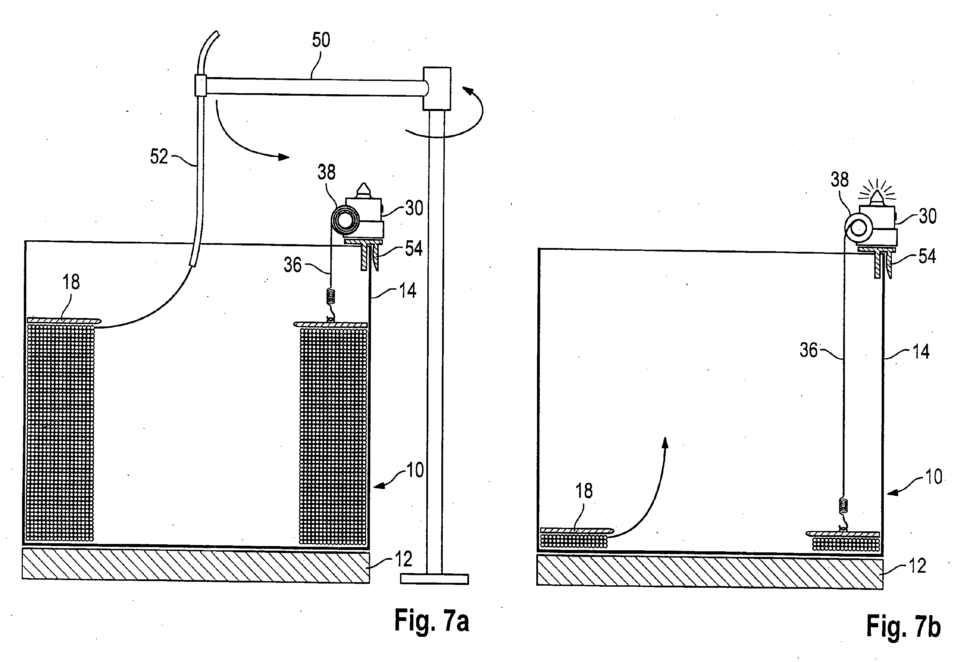

In Figure 7, a seventh embodiment is shown which largely corresponds to the sixth embodiment. The difference between the sixth and the seventh embodiment is that in the seventh embodiment, no cover 20 is placed on top of the bulk pack 10 for guiding the welding wire during withdrawal from the bulk pack. Rather, a rotatable boom 50 is used to which a liner 52 is connected. Inside liner 52, a plurality of small rolling elements are provided which ensure a smooth, low-friction displacement of the welding wire from the bulk pack towards the welding machine. This system is particularly suitable for sub-arc welding applications where welding wires having a diameter of 4 mm and above are used.

As no cover 20 is provided, electric sensor 30 is provided with a mount 54 which allows to clip it onto the upper end of one of the side walls 14 of the bulk pack. Here again, this kind of attachment allows to very conveniently transfer the electric sensor 30 from one bulk pack to the next one.

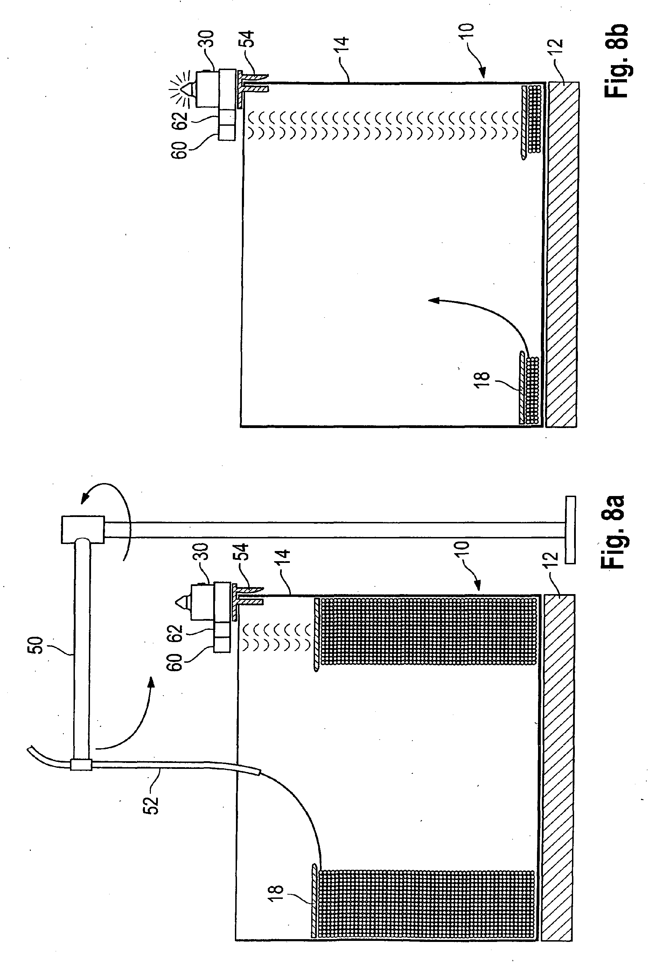

In Figure 8, an alternative embodiment is shown. Here, electric sensor 30 is provided with an emitter 60 and a receiver 62. Emitter 60 sends out a signal which can be an acoustic signals, in particular in a frequency range which cannot be heard by humans, or optical signals such as a laser beam. These signals are reflected on the upper surface of retainer 18 and are then detected by receiver 62. Electric sensor 30 is able to calculate the distance between the electric sensor 30 and the retainer based on the propagation time of the signals from the emitter to the receiver. In order to maintain a longer battery life, the detection of the wire level can be performed in intervals only, e.g. every 15 minutes.

For all embodiments using the electric sensor 30, it can be provided that the electric sensor is connected to the welding robot where additional alarms can be given on a screen or in an acoustic manner.

## Claims

1. A low wire level alarm, comprising a signal element and a wire level detection element, the wire level detection element being adapted for detecting the level of welding wire contained in a welding wire bulk pack, and the signal element being adapted for giving an operator a visual and/or acoustic signal on the level of welding wire contained in the bulk pack.

2. The alarm of claim 1 wherein the wire level detection element is a rod adapted for being placed on top of a retainer arranged inside a welding wire bulk pack.

3. The alarm of claim 1 or claim 2 wherein the signal element is a mark visible for an operator.

4. The alarm of claims 2 and 3 wherein the signal element is arranged on the rod so as to be adjustable to a desired level.

5. The alarm of any of the preceding claims wherein the signal element comprises an electric sensor.

6. The alarm of claim 5 wherein the wire level detection element is a rod adapted for being placed on top of a retainer arranged inside a welding wire bulk pack, the rod having a mark which can be detected by the electric sensor.

7. The alarm of claim 6 wherein the electric sensor is a proximity sensor.

8. The alarm of claim 5 wherein the wire level detection element is a cord wound on a reel, the electric sensor detecting the amount of cord unwound from the reel.

9. The alarm of claim 8 wherein the sensor unit comprises a micro switch.

10. The alarm of claim 5 wherein the wire level detection element is an emitter sending one of an acoustic signal and an optical signal towards the retainer, and the electric sensor has a receiver and an evaluating unit adapted to calculate the wire level based on the propagation time of the signal sent by the emitter to the receiver.

11. A welding wire bulk pack having a base, side walls and a coil of welding wire placed inside the side walls, a retainer being arranged on top of the welding wire coil so as to descend in the bulk pack when the level of welding wire inside the pack decreases, and having a low wire level alarm system which is adapted for signaling to an operator that the level of welding wire remaining in the bulk pack has fallen below a predetermined threshold.

12. The bulk pack of claim 11 wherein the low wire level alarm system has an electric sensor, the electric sensor being adapted for giving an alarm which is one of an acoustic alarm, an optical alarm and a combination of an acoustic and an optical alarm.

13. The bulk pack of claim 11 wherein a cover is provided which is arranged on the side walls and wherein the low wire level alarm system comprises a rod resting on an upper surface of the retainer and extending vertically through the cover, the rod having a mark adapted for being fixed on the rod at a desired level.

14. The bulk pack of claim 12 wherein a cover is provided which is arranged on the side walls and wherein the low wire level alarm system comprises a telescopic rod having an upper end connected to the cover and a lower end connected to the retainer, the rod having a mark adapted for being detected by the electric sensor.

15. The bulk pack of claim 12 wherein the low wire level alarm system comprises a cord extending from the electric sensor towards the retainer, the electric sensor being adapted for giving an alarm when the level of welding wire has fallen under a predetermined threshold.

16. The bulk pack of claim 15 wherein the electric sensor comprises a reel on which the cord is stored and from which it is unwound when the retainer descends in the bulk pack.

17. The bulk pack of claim 15 or claim 16 wherein the cord comprises a weight at its end associated to the retainer.

18. The bulk pack of claim 15 or claim 16 wherein the cord comprises one of a magnet and a piece of ferromagnetic metal at its end associated to the retainer, and the retainer comprises one of a piece of ferromagnetic metal and a magnet.

19. The bulk pack of claim 15 or claim 16 wherein the retainer comprises an attachment means for mechanically attaching the cord to the retainer.

20. The bulk pack of claim 19 wherein the retainer comprises an attachment eye and the cord comprises a hook.

21. The bulk pack of claim 20 wherein a cushioning spring is provided between the retainer and the electric sensor.

22. The bulk pack of claim 12 wherein a cover is provided on the side walls, the electric sensor being arranged on the cover.

23. The bulk pack of claim 12 wherein the electric sensor comprises a mount by means of which is can be placed at an upper end of one of the side walls.

24. The bulk pack of claim 12 wherein the electric sensor includes a battery as a power source.

25. A combination of a welding wire bulk pack as defined in any of claims 11 to 25 and a boom being rotatably supported and being provided with a liner through which the welding wire is withdrawn from the bulk pack.
